# FASCICULE DE BREVET EUROPEEN

(11) **EP 2 203 619 B1**
(45) Date de publication et mention de la délivrance du brevet: **08.08.2012**
(21) Numéro de dépôt: 08846143.9
(22) Date de dépôt: 31.10.2008
(51) Int. Cl.: E06B 9/32

(54) **PROCÉDÉ DE COMMANDE AUTOMATISÉE D'UNE INSTALLATION D'ÉCRAN DE PROTECTION SOLAIRE COMPORTANT DES LAMES DE TYPE RÉTRO-RÉFLÉCHISSANT**
VERFAHREN ZUR AUTOMATISIERTEN STEUERUNG EINER SONNENSCHUTZSCHIRMVORRICHTUNG MIT RÜCKREFLEKTIERENDEN TAFELN
METHOD FOR THE AUTOMATED CONTROL OF A SOLAR PROTECTION SCREEN APPARATUS INCLUDING BLADES OF THE BACK-REFLECTING TYPE

(30) Priorité: 31.10.2007 FR 0707667
(43) Date de publication de la demande: 07.07.2010
(73) Titulaire: Somfy SAS, 74300 Cluses (FR)
(72) Inventeur: GREHANT, Bernard, F-74300 Nancy-sur-cluses (FR); LAGARDE, Eric, F-74700 Sallanches (FR)
(74) Mandataire: Bugnion Genève
(86) Numéro de dépôt international: PCT/IB2008/054539
(87) Numéro de publication internationale: WO 2009/057077

(56) Documents cités:
- WO-A-01/02687
- WO-A-03/008753
- DE-A1- 10 050 409
- DE-A1- 19 632 684
- US-B2- 6 367 937

## Description

L'invention se rapporte à la commande automatisée de stores à lames ou lamelles, en particulier lorsque les lamelles présentent un effet de type rétro-réfléchissant.

Selon les cas, ces lames présentent une légère concavité orientée vers le haut ou vers le bas.

De tels stores sont décrits dans les brevets US 6,367,937, US 6.845,805 et US 6,240,999 et dans l'ouvrage « Dynamic Daylighting Architecture - Helmut Kôstler - Birkhäuser - ISBN 3-7643-6730-X.

De tels stores sont prévus pour un positionnement fixe. La motorisation est principalement envisagée pour une opération de déploiement repliement, par exemple pour permettre le nettoyage des vitres.

Ces stores ne peuvent se commander automatiquement de manière traditionnelle.

Il est connu en effet, en présence de lumière solaire directe, d'orienter le plan moyen des lames de stores conventionnels de façon à ce qu'il soit sensiblement perpendiculaire aux rayons solaires. Dans certains cas, comme dans le brevet US 5,142,133, un dispositif électronique asservit la position de la lame de manière à obtenir cette situation perpendiculaire. Ce dispositif électronique 22 comprend deux photodiodes, et l'inclinaison des lames est commandée automatiquement de manière à obtenir l'égalité du rayonnement incident sur chaque photodiode. Un deuxième dispositif photodétecteur 24 commande le repliement de l'ensemble du store en fonction de la brillance moyenne (*background brightness*) du ciel. Lorsque la brillance moyenne devient inférieure à un seuil donné, le store est replié. Ce deuxième photodétecteur permet également de passer d'un mode de commande d'orientation automatique à un mode d'orientation horizontale des lames lors d'un passage nuageux (voir col.6 125-41).

Ce document propose ce dispositif d'asservissement pour éviter le recours à une horloge astronomique de type « sun-traking » connue pour déterminer la position apparente du soleil dans le ciel et orienter les lames en conséquence.

Or c'est un mode de régulation différent qu'il faut mettre en oeuvre sur les lames présentant un effet rétro-réfléchissant, alors que le mode d'orientation sensiblement perpendiculaire s'appliquera préférentiellement à d'autres situations décrites dans l'invention.

L'invention a pour but de remédier aux insuffisances de l'art antérieur, en proposant un dispositif de commande adapté à ce type de lames, qu'elles soient à axe horizontal ou à axe vertical.

L'art antérieur décrit de nombreuses configurations dans lesquelles des lames réfléchissantes sont utilisées dans un écran de protection solaire, le brevet US 2,209,355 étant probablement un des documents les plus anciens.

Le brevet US 6,397,917 prévoit une double motorisation d'orientation séparée de la partie haute et de la partie basse de l'écran. Les lames ne sont pas rétro-réfléchissantes.

Le brevet EP 0 303 107 décrit des lames réfléchissantes sur leur face supérieure et rétro-réfléchissantes dans au moins une partie de la face inférieure. Les lames sont préférentiellement fixes.

La demande de brevet FR 2 574 469 décrit des lames planes ou faiblement concaves et réfléchissantes dans leur face supérieure, avec orientation variable selon la saison (hiver / été), un mécanisme pouvant modifier légèrement l'inclinaison des lames.

La demande de brevet DE 43 39 003 propose un mécanisme de diffusion du rayonnement solaire directe vers l'intérieur de la pièce au moyen de réflexions successives entre la face supérieure d'une lame réfléchissante et la face inférieure de la lame située au dessus, également réfléchissante.

Le brevet US 4,292,763 prévoit que des lames réfléchissantes légèrement concaves et utilisées normalement en position quasi-horizontale pour réfléchir la lumière vers le plafond de la pièce puissent également être utilisées en position fermée de l'écran.

La demande de brevet FR 2 448 619 prévoit des lames orientables dont une face supérieure est réfléchissante tandis que la face inférieure est absorbante.

Pour de telles lames à face supérieure réfléchissante et face inférieure absorbante, fortement concaves, la demande de brevet DE 100 50 409 propose un dispositif d'orientation automatique s'affranchissant d'une horloge astronomique (heure et date) en détectant, par un capteur situé en bord de lame, la focalisation du rayonnement solaire direct réfléchi sur la lame inférieure, et pilotant l'orientation des lames afin d'éviter que le rayonnement solaire réfléchi n'atteigne la partie absorbante de la lame quand la saison est l'été.

Le but de l'invention est de fournir un procédé de commande obviant aux inconvénients évoqués précédemment et améliorant les procédés de commande connus de l'art antérieur. En particulier, l'invention propose un procédé de commande d'un écran de protection permettant d'obtenir à l'intérieur d'un local équipé de l'écran un confort visuel optimisé.

Selon un premier aspect, le procédé selon l'invention est défini par la revendication 1.

Différents modes d'exécution du procédé sont définis par les revendications 2 à 14.

Selon ce premier aspect, l'installation d'écran de protection solaire motorisée est définie par la revendication 15.

Le dessin annexé représente, à titre d'exemple, un mode de réalisation d'une installation de protection solaire selon l'invention et un mode d'exécution d'un procédé de commande d'une telle installation.
La figure 1 est un schéma d'un mode de réalisation d'une installation de protection solaire selon l'invention.
La figure 2 est un ordinogramme d'un mode d'exécution d'un procédé de commande d'installation de protection solaire selon l'invention.

L'installation INST comprend un écran de protection solaire SCR constitué de lames B1, B2, B3 (ou B'1, B'2, B'3) guidées en orientation par des échelles L1 et L2 raccordées à un moteur MOT.

L'écran SCR est disposé derrière un vitrage GLZ de façade, dans un local situé à l'intérieur d'un bâtiment. Alternativement, l'écran est disposé devant le vitrage, extérieurement au bâtiment.

Les lames sont de type rétro-réfléchissant, ou catadioptrique. De manière idéale, tout rayon incident sur la lame est réfléchi selon la direction incidente. Le comportement d'une lame sera dit ici rétro-réfléchissant si cette propriété est vérifiée de manière globale, c'est-à-dire si, pour au moins la majorité des rayons incidents et des points d'incidence, tout rayon réfléchi est émis dans un cône de faible ouverture (par exemple 30°) incluant la direction incidente. Le comportement peut être rétro-réfléchissant dans seulement une certaine plage d'inclinaisons relatives des rayons incidents par rapport aux lames. En dehors d'une telle plage d'inclinaisons, certains des rayons solaires directs ne sont pas rétro-réfléchis, et passent donc vers l'intérieur du local.

Un tel écran est par exemple décrit dans la brevet US 6,845,805, ou encore dans le brevet US 6,367,937.

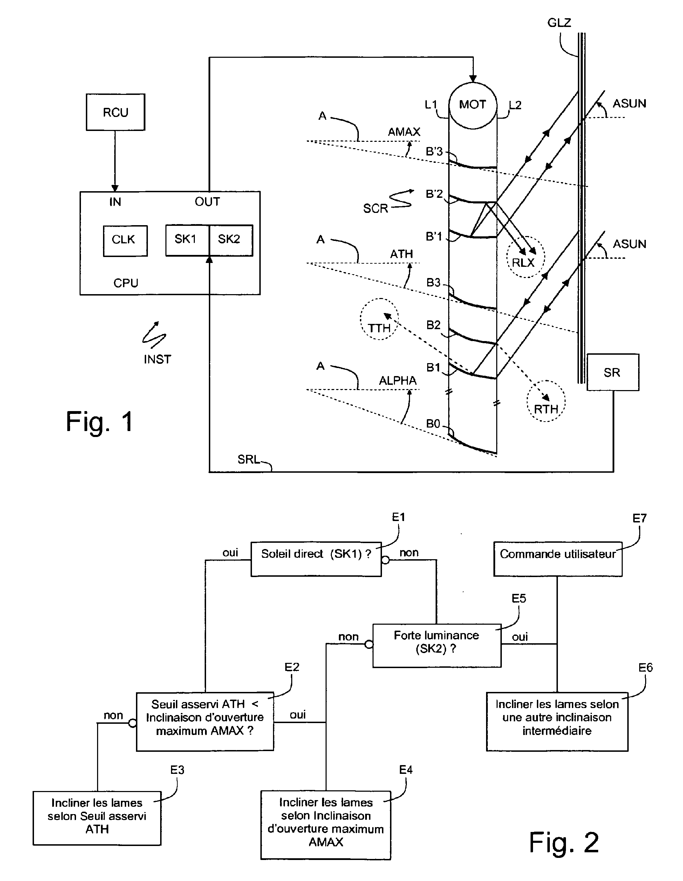

Sur la figure 1, les rayons solaires arrivent depuis la droite de l'écran, et l'intérieur du bâtiment, où se situe l'utilisateur, est à gauche de l'écran.

La figure représente l'écran dans deux orientations différentes, obtenues par action du moteur MOT, pour un même angle d'incidence ASUN du rayonnement solaire direct, afin de monter les effets de l'orientation des lames sur la réflexion.

Tout en bas de l'écran, une lame B0 est représentée dans une inclinaison quelconque ALPHA.

L'inclinaison est représentée comme étant l'angle aigu compté algébriquement entre un plan de référence, tangent aux lames et un plan horizontal A. Du fait de formes complexes que peuvent avoir les lames, le plan de référence peut être pris comme étant le plan comprenant les points d'attache de la lame aux cordons de support sous forme d'échelles. L'écart angulaire résultant du choix d'un plan de référence plutôt qu'un autre se traduit par un décalage constant qui n'intervient pas dans le procédé de commande.

La partie basse de l'écran représente ensuite trois lames B1-B3, dans une première inclinaison particulière ATH.

Le rayonnement solaire direct parvient sur une portion supérieure de la première lame B1. Dans la première inclinaison particulière ATH, toute la lumière est rétro-réfléchie, ce qui est figuré sous forme de flèches bidirectionnelles. Comme déjà précisé, selon la géométrie de la lame, la rétro-réflexion n'est pas nécessairement véritablement idéale (retour dans la direction exacte de l'incidence) et peut se ramener à une focalisation des rayons réfléchis dans un plan quelconque extérieur à l'écran (et à droite de celui-ci).

Par contre, dans cette première inclinaison particulière, une partie du rayonnement réfléchi est juste à la limite de rencontrer la partie inférieure de la deuxième lame B2 et de s'y réfléchir, ce que figure une flèche pointillée RTH.

Alternativement, la première inclinaison particulière correspond à la limite d'apparition de rayons non rétro-réfléchis, c'est-à-dire réfléchis tout en pénétrant dans la pièce, ce que figure une flèche pointillée TTH.

Dans tous les cas, la première inclinaison particulière ATH, dite aussi « seuil d'inclinaison » ou « seuil asservi », est dépendante de l'angle d'incidence ASUN du rayonnement solaire direct.

Le seuil asservi à l'angle d'incidence est défini comme l'inclinaison limite pour laquelle des rayons solaires directs sont rétro-réfléchis par les lames sans affecter les autres lames ou, alternativement, est défini comme l'inclinaison limite pour laquelle des rayons solaires directs sont réfléchis par les lames sans qu'il y ait rétro-réflexion.

La partie haute de l'écran représente trois lames B'1-B'3 dans une deuxième inclinaison particulière AMAX.

Les trois lames B'1-B'3 sont par exemple les lames précédentes B1-B3, représentées dans une position angulaire différente.

La deuxième inclinaison particulière AMAX est visuellement plus intéressante que la première inclinaison, car elle donne une meilleure vision de l'extérieur à travers l'écran, les lames étant moins inclinées. L'inclinaison particulière AMAX correspond à l'inclinaison d'ouverture maximum de l'écran relativement à une direction préférée, c'est-à-dire une position d'inclinaison des lames dans laquelle les aires des lames projetées selon cette direction préférée sont minimales.

Cette inclinaison est indépendante de l'angle d'incidence ASUN du rayonnement solaire. Il s'agit d'une valeur qui peut être fixée par le fabricant ou déterminée par apprentissage (par l'installateur ou par l'occupant) car il n'est pas obligatoire que ce soit la vue horizontale qui soit privilégiée. Au contraire, il est possible que l'occupant d'un bureau situé en étage souhaite privilégier une vue inclinée vers le sol. Dans ce cas, l'inclinaison AMAX peut être significativement plus importante que représenté sur la figure 1. L'inclinaison particulière AMAX correspond à une position d'inclinaison des lames dans laquelle les aires des lames projetées selon la direction de la vue privilégiée par l'occupant sont minimales.

Cependant, il apparaît que, pour la même inclinaison solaire que précédemment, une partie du rayonnement rétro-réfléchi sur la première lame se reflète de manière significative sur la deuxième lame, et donne naissance à un rayonnement réfléchi parasite RLX susceptible d'être source de nuisance pour le voisinage. Ce rayonnement réfléchi parasite peut aussi se réfléchir sur le vitrage GLZ, et donner naissance à une deuxième incidence de rayonnement solaire impossible à maîtriser.

Afin d'appliquer le procédé de commande selon l'invention, l'installation comprend une unité de commande CPU, une unité de commande distante RCU, activable par l'utilisateur occupant le local et reliée à une entrée IN de l'unité de commande CPU. Une sortie OUT de l'unité de commande permet d'activer dans l'un ou l'autre sens le moteur MOT d'orientation des lames. Le détail de la chaîne cinématique n'est pas représenté. L'unité de commande comprend notamment des moyens logiciels pour régir un fonctionnement de l'installation selon le procédé objet de l'invention dont un mode de réalisation est décrit en détail plus bas. En particulier, ces moyens logiciels comprennent des programmes informatiques.

L'installation peut en particulier comprendre un moyen de détermination d'une première inclinaison particulière ATH des lames définie comme étant l'inclinaison pour laquelle des rayons solaires directs sont rétro-réfléchis par les lames sans affecter les autres lames ou, alternativement, définie comme l'inclinaison limite pour laquelle des rayons solaires directs sont réfléchis par les lames sans qu'il y ait rétro-réflexion, et/ou un moyen de détermination d'une deuxième inclinaison particulière AMAX des lames définie comme l'inclinaison d'ouverture maximum de l'écran relativement à une direction préférée et/ou un moyen de détection de rayons solaires directs et/ou un moyen d'orientation des lames et/ou un moyen de comparaison des valeurs des première et deuxième inclinaisons particulières.

De plus, l'installation comprend un capteur SR, relié à l'unité de commande par une liaison SRL. Le capteur permet d'élaborer dans l'unité de commande CPU au moins deux informations sur l'état du ciel.

Une première information SK1 traduit la présence de rayonnement solaire direct sur le vitrage GLZ. Une deuxième information SK2 traduit une luminance du ciel, au moins partielle, supérieure à un seuil donné. En absence de soleil direct, le ciel peut présenter globalement ou localement une forte luminance du fait de la diffusion ou de la réflexion de la lumière solaire sur des surfaces claires (nuages, immeubles voisins...) comme décrit dans le brevet US 7,193,201, ce qui se traduit par un inconfort visuel.

L'unité de commande CPU comprend enfin une horloge astronomique CLK. On entend par là un dispositif donnant la valeur courante de la hauteur solaire (égale à l'angle d'incidence ASUN) à partir de l'heure solaire et de la date et comprenant les moyens de calculs nécessaires à déterminer, périodiquement la valeur courante du seuil d'inclinaison ATH, c'est-à-dire de la position d'inclinaison asservie à la hauteur solaire. Ces moyens de calculs comprennent une loi de variation horaire et calendaire dont les paramètres (comme la latitude, la longitude, l'inclinaison du store par rapport à la verticale, l'exposition du store par rapport aux points cardinaux, les dimensions et espacements des lames) peuvent être définis au moment de l'installation. Par exemple, ces paramètres peuvent être saisis grâce à une interface homme-machine de l'installation. Alternativement, une partie de ces paramètres peut être déterminée automatiquement lors de l'installation après qu'un installateur ou un utilisateur a mémorisé, à certaines dates, une ou plusieurs positions d'inclinaisons particulières des lames dans laquelle les rayons solaires directs sont réfléchis par les lames sans affecter les autres lames et sans traverser le store ou par réflexions sur les lames, ou a mémorisé, à certaines dates, une ou plusieurs positions d'inclinaisons particulières des lames dans lesquelles les rayons solaires directs sont rétro-réfléchis par les lames sans affecter les autres lames.

Une marge de sécurité de quelques degrés est avantageusement intégrée dans la valeur de seuil ATH, de manière à éviter des situations de premières réflexions indésirables si la loi de variation horaire et calendaire n'est pas suffisamment précise, et/ou si la détermination des paramètres de cette loi n'a pas été réalisée avec suffisamment de soin.

Par ailleurs, l'installateur définit l'inclinaison d'ouverture maximum AMAX en fonction des souhaits de l'utilisateur et/ou de la configuration de la pièce (vue, étage ou rez-de-chaussée).

Le procédé de commande selon l'invention est décrit en référence à la figure 2.

Dans une première étape E1, on teste la présence de soleil direct. Si la première information SK1 traduit la présence de soleil direct sur le vitrage GLZ, alors on passe à une deuxième étape E2, sinon on passe à une cinquième étape E5.

Dans la deuxième étape E2, on compare la valeur courante du seuil d'inclinaison ATH (ou seuil asservi) à l'inclinaison d'ouverture maximum

AMAX. Si le seuil d'inclinaison ATH est supérieur à l'inclinaison d'ouverture maximum AMAX, alors on passe à une troisième étape E3, dans laquelle l'unité de commande délivre au moteur les signaux nécessaires à orienter les lames selon une première orientation égale au seuil d'inclinaison ATH.

En effet, cette situation dans laquelle le seuil d'inclinaison ATH est supérieur à l'inclinaison d'ouverture maximum AMAX correspond à celle de la figure 1, dans laquelle il y aurait réflexion parasite significative si l'inclinaison d'ouverture maximum était maintenue.

Si le seuil d'inclinaison ATH est inférieur à l'inclinaison d'ouverture maximum AMAX, alors on passe à une quatrième étape E4, dans laquelle l'unité de commande délivre au moteur les signaux nécessaires à orienter les lames selon une première orientation égale à l'inclinaison d'ouverture maximum AMAX : la vue vers l'extérieur peut être privilégiée sans inconvénient.

Ainsi, en présence de rayonnement solaire direct, les lames sont inclinées selon une première inclinaison intermédiaire qui est égale à l'inclinaison d'ouverture maximum de l'écran tant que le seuil d'inclinaison asservi à la hauteur solaire reste inférieur à l'inclinaison d'ouverture maximum, et qui est égale au seuil d'inclinaison dans le cas contraire.

Lors de la cinquième étape E5, atteinte en absence de rayonnement solaire direct, l'information de luminance du ciel est testée. Si la luminance globale ou locale n'est pas considérée comme forte, alors on passe à la quatrième étape E4 d'orientation des lames selon l'inclinaison d'ouverture maximum AMAX. Si la luminance globale ou locale est considérée comme forte, alors on passe à une sixième étape E6 dans laquelle on oriente les lames selon une deuxième orientation. Cette deuxième orientation correspond à une inclinaison de forte valeur (proche de 90°) au moins telle que le plan moyen des lames est sensiblement perpendiculaire à la direction de plus forte luminance du ciel. Si le ciel est uniformément lumineux, (situation dite de « ciel blanc »), alors cette deuxième orientation est préférentiellement une inclinaison extrême des lames permettant la fermeture totale de l'écran ou approchant celle-ci.

De manière simplifiée, cette deuxième orientation est prédéfinie, par le constructeur ou suite à un apprentissage.

Dans une variante plus élaborée, cette valeur est déterminée par le capteur SR et l'unité de commande CPU après analyse de l'état du ciel et repérage éventuel d'une direction de plus forte luminance.

Une commande utilisateur spécifique, activée lors d'une septième étape E7 sur l'unité de commande distante RCU, permet à tout instant d'activer la sixième étape E6, de manière prioritaire par rapport aux actions automatisées.

A l'issue des étapes E3, E4 et E6, le procédé boucle, après temporisation éventuelle, sur la première étape E1 (bouclage non représenté).

Préférentiellement l'inclinaison d'ouverture maximum (AMAX) de l'écran relativement à une direction préférée présente une valeur par défaut, par exemple nulle) tant qu'une autre valeur n'est pas définie par l'utilisateur. La définition de cette autre valeur peut être réalisée de manière simple, par exemple, avec les deux boutons d'une télécommande RCU, l'utilisateur oriente les lames jusqu'à atteindre une inclinaison préférée lui permettant d'optimiser la vue dans une direction donnée. Une fois cette inclinaison obtenue, l'utilisateur appuie simultanément sur les deux boutons. La position courante du moteur est alors mise en mémoire dans l'unité de commande CPU, et cette valeur correspond à l'inclinaison d'ouverture maximum.

En variante, plusieurs valeurs de référence peuvent être enregistrées par l'utilisateur pour l'inclinaison d'ouverture maximum (AMAX), par exemple une valeur d'été et une valeur d'hiver, ou encore une valeur de matin et une valeur d'après-midi. Ces valeurs de référence sont disposées dans un tableau de valeurs de l'inclinaison d'ouverture maximum, relatives aux critères de préférence de l'utilisateur, et la valeur courante de l'inclinaison d'ouverture maximum est automatiquement lue dans ce tableau en fonction de la valeur du critère de préférence.

Dans la présente demande, les termes « orientation » et « inclinaison » sont synonymes, par contre les termes « inclinaison intermédiaire » et « inclinaison particulière » ne le sont pas.

## Revendications

1. Procédé de commande automatisée d'une installation (INST) d'écran (SCR) de protection solaire comportant des lames (B1, B2, B3) de type rétro-réfléchissant, inclinables entre deux inclinaisons extrêmes, **caractérisé en ce que**, en présence de rayonnement solaire direct, les lames sont inclinées selon une première inclinaison intermédiaire, égale à l'inclinaison d'ouverture maximum (AMAX) de l'écran relativement à une direction préférée, tant qu'un seuil d'inclinaison asservi à la hauteur solaire (ATH) reste inférieur à l'inclinaison d'ouverture maximum.

2. Procédé de commande selon la revendication 1, **caractérisé en ce que**, en présence de rayonnement solaire direct, la première inclinaison intermédiaire, devient égale au seuil d'inclinaison asservi à la hauteur solaire (ATH) dans le cas où celui-ci est supérieur à l'inclinaison d'ouverture maximum (AMAX).

3. Procédé de commande selon la revendication 1 ou 2, **caractérisé en ce que** le seuil d'inclinaison asservi à la hauteur solaire (ATH) est défini comme étant l'inclinaison limite pour laquelle des rayons solaires directs sont rétro-réfléchis par les lames sans affecter les autres lames.

4. Procédé de commande selon la revendication 1 ou 2, **caractérisé en ce que** le seuil d'inclinaison asservi à la hauteur solaire (ATH) est défini comme étant l'inclinaison limite pour laquelle des rayons solaires directs sont réfléchis par les lames sans qu'il y ait rétro-réflexion.

5. Procédé de commande selon l'une des revendications précédentes, **caractérisé en ce que** les lames sont placées dans l'inclinaison d'ouverture maximum (AMAX) lorsque le ciel ne présente aucune zone de forte luminance.

6. Procédé de commande selon l'une des revendications précédentes, **caractérisé en ce que** les lames sont placées selon une deuxième inclinaison, lors de l'occurrence de l'un des évènements suivants :
- commande de l'utilisateur,
- détection d'au moins une zone de forte luminance du ciel, hors soleil direct.

7. Procédé de commande selon la revendication précédente, **caractérisé en ce que** la deuxième inclinaison est l'une des inclinaisons extrêmes, cette inclinaison étant telle que l'écran est sensiblement fermé à toute transmission lumineuse.

8. Procédé de commande selon la revendication 6, **caractérisé en ce que** la deuxième inclinaison correspond à une position des lames sensiblement perpendiculaire à la direction de forte luminance du ciel.

9. Procédé de commande selon l'une des revendications précédentes, **caractérisé en ce que** le seuil d'inclinaison asservi à la hauteur solaire (ATH) est déterminée par application d'une loi de variation horaire et calendaire.

10. Procédé de commande selon la revendication précédente, **caractérisé en ce que** des paramètres de la loi de variation horaire et calendaire sont déterminés par une étape d'apprentissage dans laquelle un opérateur déplace les lames de manière à les positionner selon une inclinaison de réglage, cette inclinaison de réglage étant l'inclinaison limite des lames dans laquelle les rayons solaires directs sont réfléchis par les lames sans affecter les autres lames.

11. Procédé de commande selon la revendication 9, **caractérisé en ce que** des paramètres de la loi de variation horaire et calendaire sont déterminés par une étape d'apprentissage dans laquelle un opérateur déplace les lames de manière à les positionner selon une inclinaison de réglage, cette inclinaison de réglage étant l'inclinaison limite des lames dans laquelle des rayons solaires directs ne sont pas rétro-réfléchis par les lames.

12. Procédé de commande selon l'une des revendications précédentes, **caractérisé en ce que** l'inclinaison d'ouverture maximum (AMAX) de l'écran relativement à une direction préférée présente une valeur par défaut tant qu'une autre valeur n'est pas définie par l'utilisateur.

13. Procédé de commande selon la revendication précédente, **caractérisé en ce que** la valeur par défaut est nulle.

14. Procédé de commande selon l'une des revendications précédentes, **caractérisé en ce que** l'inclinaison d'ouverture maximum (AMAX) de l'écran relativement à une direction préférée est automatiquement choisie dans un tableau de valeurs relatives à des critères de préférence de l'utilisateur.

15. Installation (INST) d'écran de protection solaire motorisée comprenant des lames (B1, B2, B3) de type rétro-réfléchissant, inclinables entre deux positions d'inclinaison extrêmes, **caractérisée en ce qu'**elle comprend des moyens matériels (CPU, CLK, SK1, SK2, MOT) et logiciels de mise en oeuvre du procédé de commande selon l'une des revendications précédentes.

## Claims

1. An automated control method for a solar protection screen (SCR) installation (INST) comprising retroreflecting-type slats (B1, B2, B3) which can be inclined between two extreme inclinations, wherein, in the presence of direct solar radiation, the slats are inclined at a first intermediate inclination, equal to the maximum aperture inclination (AMAX) of the screen relative to a preferred direction, as long as an inclination threshold automatically controlled in relation to the height of the sun (ATH) remains less than the maximum aperture inclination.

2. The control method as claimed in claim 1, wherein, in the presence of direct solar radiation, the first intermediate inclination becomes equal to the inclination threshold automatically controlled in relation to the height of the sun (ATH) when the latter is greater than the maximum aperture inclination (AMAX).

3. The control method as claimed in claim 1 or 2, wherein the inclination threshold automatically controlled in relation to the height of the sun (ATH) is defined as being the limit inclination for which direct solar rays are retroreflected by the slats without affecting the other slats.

4. The control method as claimed in claim 1 or 2, wherein the inclination threshold automatically controlled in relation to the height of the sun (ATH) is defined as being the limit inclination for which some direct solar rays are reflected by the slats without retroreflection.

5. The control method as claimed in one of the preceding claims, wherein the slats are placed at the maximum aperture inclination (AMAX) when the sky has no areas of strong luminance.

6. The control method as claimed in one of the preceding claims, wherein the slats are placed at a second inclination when one of the following events occurs:
- command from the user,
- detection of at least one area of strong sky luminance, excluding direct sunlight.

7. The control method as claimed in the preceding claim, wherein the second inclination is one of the extreme inclinations, this inclination being such that the screen is substantially closed to any light transmission.

8. The control method as claimed in claim 6, wherein the second inclination corresponds to a position of the slats that is substantially perpendicular to the direction of strong sky luminance.

9. The control method as claimed in one of the preceding claims, wherein the inclination threshold automatically controlled in relation to the height of the sun (ATH) is determined by application of a model of daily and seasonal variation.

10. The control method as claimed in the preceding claim, wherein parameters of the model of daily and seasonal variation are determined by a learning step in which an operator moves the slats so as to position them at a setting inclination, this setting inclination being the limit inclination of the slats in which the direct solar rays are reflected by the slats without affecting the other slats.

11. The control method as claimed in claim 9, wherein parameters of the model of daily and seasonal variation are determined by a learning step in which an operator moves the slats so as to position them at a setting inclination, this setting inclination being the limit inclination of the slats in which some direct solar rays are not retroreflected by the slats.

12. The control method as claimed in one of the preceding claims, wherein the maximum aperture inclination (AMAX) of the screen relative to a preferred direction has a default value as long as another value is not defined by the user.

13. The control method as claimed in the preceding claim, wherein the default value is zero.

14. The control method as claimed in one of the preceding claims, wherein the maximum aperture inclination (AMAX) of the screen relative to a preferred direction is automatically chosen from a table of values relative to user preference criteria.

15. A motor-driven solar protection screen installation (INST) comprising retroreflecting-type slats (B1, B2, B3) which can be inclined between two extreme inclination positions, wherein said installation comprises hardware means (CPU, CLK, SK1, SK2, MOT) and software means for implementing the control method as claimed in one of the preceding claims.

## Patentansprüche

1. Automatisiertes Steuerungsverfahren einer Einrichtung (INST) eines Sonnenschutzschirms, die Lamellen (B1, B2, B3) des retroreflektierenden Typs umfasst, die zwischen zwei extremen Neigungen geneigt werden können, **dadurch gekennzeichnet, dass** die Lamellen bei Vorliegen direkter Sonneneinstrahlung gemäß einer ersten Zwischenneigung geneigt werden, die der maximalen Öffnungsneigung (AMAX) des Schirms in Bezug auf eine bevorzugte Richtung gleich ist, solange eine Neigungsgrenze, die der Sonnenhöhe (ATH) folgt, unter der maximalen Öffnungsneigung bleibt.

2. Steuerungsverfahren nach Anspruch 1, **dadurch gekennzeichnet, dass** die erste Zwischenneigung bei Vorliegen direkter Sonneneinstrahlung der Neigungsgrenze, die der Sonnenhöhe (ATH) folgt, gleich wird, wenn diese größer als die maximale Öffnungsneigung (AMAX) ist.

3. Steuerungsverfahren nach Anspruch 1 oder 2, **dadurch gekennzeichnet, dass** die Neigungsgrenze, die der Sonnenhöhe (ATH) folgt, als die Grenzneigung definiert ist, bei der direkte Sonnenstrahlen von den Lamellen ohne Auswirkung auf die anderen Lamellen retroreflektiert werden.

4. Steuerungsverfahren nach Anspruch 1 oder 2, **dadurch gekennzeichnet, dass** die Neigungsgrenze, die der Sonnenhöhe (ATH) folgt, als die Grenzneigung definiert ist, bei der direkte Sonnenstrahlen von den Lamellen ohne Retroreflexion reflektiert werden.

5. Steuerungsverfahren nach einem der vorhergehenden Ansprüche, **dadurch gekennzeichnet, dass** die Lamellen in die maximale Öffnungsneigung gebracht werden, wenn der Himmel keine Zonen starker Leuchtdichte aufweist.

6. Steuerungsverfahren nach einem der vorhergehenden Ansprüche, **dadurch gekennzeichnet, dass** die Lamellen bei Auftreten eines der folgenden Ereignisse in eine zweite Neigung gebracht werden:
- Betätigung durch den Benutzer,
- Erkennung mindestens einer Zone starker Leuchtdichte im Himmel, mit Ausnahme von direktem Sonnenlicht.

7. Steuerungsverfahren nach dem vorhergehenden Anspruch, **dadurch gekennzeichnet, dass** die zweite Neigung eine der extremen Neigungen ist, wobei diese Neigung derart ist, dass der Schirm im Wesentlichen für jegliche Lichttransmission geschlossen ist.

8. Steuerungsverfahren nach Anspruch 6, **dadurch gekennzeichnet, dass** die zweite Neigung einer Stellung der Lamellen entspricht, die im Wesentlichen senkrecht zur Richtung der starken Leuchtdichte des Himmels ist.

9. Steuerungsverfahren nach einem der vorhergehenden Ansprüche, **dadurch gekennzeichnet, dass** die Neigungsgrenze, die der Sonnenhöhe (ATH) folgt, durch Anwendung eines Variationsgesetzes entsprechend Uhrzeit und Kalender bestimmt wird.

10. Steuerungsverfahren nach dem vorhergehenden Anspruch, **dadurch gekennzeichnet, dass** die Parameter des Variationsgesetzes entsprechend Uhrzeit und Kalender durch einen Lernschritt bestimmt werden, in dem ein Bediener die Lamellen so bewegt, dass sie gemäß einer Einstellungsneigung positioniert werden, wobei diese Einstellungsneigung die Grenzneigung der Lamellen ist, bei der die direkten Sonnenstrahlen von den Lamellen ohne Auswirkung auf die anderen Lamellen reflektiert werden.

11. Steuerungsverfahren nach Anspruch 9, **dadurch gekennzeichnet, dass** die Parameter des Variationsgesetzes entsprechend Uhrzeit und Kalender durch einen Lernschritt bestimmt werden, in dem ein Bediener die Lamellen so bewegt, dass sie gemäß einer Einstellungsneigung positioniert werden, wobei diese Einstellungsneigung die Grenzneigung der Lamellen ist, bei der direkte Sonnenstrahlen von den Lamellen nicht retroreflektiert werden.

12. Steuerungsverfahren nach einem der vorhergehenden Ansprüche, **dadurch gekennzeichnet, dass** die maximale Öffnungsneigung (AMAX) des Schirms in Bezug auf eine bevorzugte Richtung einen Standardwert aufweist, solange kein anderer Wert von dem Benutzer definiert wird.

13. Steuerungsverfahren nach dem vorhergehenden Anspruch, **dadurch gekennzeichnet, dass** der Standardwert null ist.

14. Steuerungsverfahren nach einem der vorhergehenden Ansprüche, **dadurch gekennzeichnet, dass** die maximale Öffnungsneigung (AMAX) des Schirms in Bezug auf eine bevorzugte Richtung automatisch aus einer Tabelle von Werten in Bezug auf Vorzugskriterien des Benutzers ausgewählt wird.

15. Motorisierte Einrichtung (INST) eines Sonnenschutzschirms, die Lamellen (B1, B2, B3) des retroreflektierenden Typs umfasst, die zwischen zwei extremen Neigungen geneigt werden können, **dadurch gekennzeichnet, dass** sie Hardwaremittel (CPU, CLK, SK1, SK2, MOT) und Softwaremittel zur Durchführung des Steuerungsverfahrens nach einem der vorhergehenden Ansprüche umfasst.
